(19) Europäisches Patentamt

European Patent Office

Office européen des brevets

(11) EP 1 596 167 A1

(12) EUROPEAN PATENT APPLICATION

(43) Date of publication:
16.11.2005 Bulletin 2005/46

(51) Int Cl.⁷: **G01D 18/00**, G01D 3/02, G05G 1/14

(21) Application number: 05010578.2

(22) Date of filing: 16.05.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **14.05.2004 US 846817**

(71) Applicant: **TELEFLEX INCORPORATED**
**Plymouth Meeting, PA 19462 (US)**

(72) Inventor: **Ouyang, Jiyuan**
**Windsor Ontario N9E 4P5 (CA)**

(74) Representative: **McDonough, Jonathan**
**Urquhart-Dykes & Lord LLP**
**Tower North Central**
**Merrion Way**
**Leeds LS2 8PA (GB)**

(54) **Method for adjusting a control signal of an electronic sensor**

(57) A method of adjusting a control signal generated by a sensor (16) is provided. The control signal varies as a pedal lever (14) rotates between an idle position and a wide-open throttle (WOT) position. The method comprises comparing target values ($P_{IdleT}$, $P_{WotT}$) for the control signal at the idle position and the WOT position with initial values ($P_{IdleNT}$, $P_{WotNT}$) at the idle position and the WOT position to determine if the control signal needs to be adjusted. To adjust the control signal, first (26) and second (28) trim resistors are laser trimmed. An intermediate target value ($P_{IdleInt}$) is determined prior to laser trimming and the first trim resistor (26) is laser trimmed until the value of the control signal at the idle position is substantially equal to the intermediate target value ($P_{IdleInt}$). As a result, when the second trim resistor (28) is laser trimmed, the value of the control signal at the idle position drifts to the corresponding target value ($P_{IdleT}$), thus eliminating the need to re-trim the first trim resistor (26).

FIG - 3

EP 1 596 167 A1

**Description**

**FIELD OF THE INVENTION**

The present invention relates to a method for adjusting a control signal of an electronic sensor used in a pedal assembly. More specifically, the present invention relates to a method for adjusting the control signal of the sensor by laser trimming resistors electrically connected to the sensor.

**BACKGROUND OF THE INVENTION**

Electronic sensors are used in pedal assemblies to generate a control signal that varies linearly in value as a pedal lever rotates between an idle position and a wide-open throttle position. The sensor typically comprises a main resistive track and a spaced conductive track printed on a circuit board. A sliding contact is attached to the pedal lever. The sliding contact slides along the tracks while electrically connecting the tracks when the pedal lever rotates between the idle position and the wide-open throttle position. The control signal varies linearly in value as the sliding contact slides along the tracks in accordance with well-known principles of potentiometers.

The control signal generated by the sensor is transmitted to an electronic control module (ECM) to control a vehicle system such as an electronic throttle control system. In electronic throttle control, the ECM controls a position of a throttle based on the value of the control signal that is transmitted from the sensor. Thus, as the value of the control signal varies, so does the position of the throttle. Most ECMs are programmed to recognize predetermined values for the transmitted control signal. More specifically, most ECMs are programmed to recognize a predetermined range of values for the control signal between the idle position and the wide-open throttle position. As a result, in the event that initial values of the control signal are not within the predetermined range, the control signal generated by the sensor must be adjusted prior to use to correspond to the predetermined range of values so that the throttle can be controlled appropriately.

To adjust the control signal, target values are first selected for the control signal. The target values correspond to the predetermined range of values recognized by the ECM. The target values include one target value that represents the idle position and another target value that represents the wide-open throttle position. Once these target values are selected, the initial values of the control signal are measured when the pedal lever is at the idle position and the wide-open throttle position. The initial values are then compared to the target values. Upon finding discrepancy between the values, the control signal is adjusted.

First and second trim resistors are electrically connected in series with the main resistive track to adjust the control signal. When the initial values do not substantially equal the target values, the trim resistors are laser trimmed. This involves trimming a portion of the first trim resistor while measuring the value of the control signal at the idle position until the value of the control signal at the idle position is substantially equal to its corresponding target value. The process continues by trimming a portion of the second trim resistor while measuring the value of the control signal at the wide-open throttle position until the value of the control signal at the wide-open throttle position is substantially equal to its corresponding target value. Of course, in accordance with general principles of electronic circuits, upon trimming the second trim resistor, the value of the control signal at the idle position drifts away from its corresponding target value. The first trim resistor is then trimmed again, and the process continues until the target values are substantially met. As a result, laser trimming the trim resistors is an iterative process that requires back-and-forth trimming until the target values are reached.

**BRIEF SUMMARY OF THE INVENTION AND ADVANTAGES**

The present invention provides a method for adjusting a control signal generated by an electronic sensor using first and second trim resistors electrically connected to the sensor. The sensor is fitted to a pedal assembly having a pedal lever and the control signal generated by the sensor varies in value as the pedal lever rotates between an idle position and a wide-open throttle position. The method for adjusting the control signal includes selecting a target value for the control signal to be generated by the sensor when the pedal lever is at the idle position and selecting a target value for the control signal to be generated by the sensor when the pedal lever is at the wide-open throttle position. Once the target values are selected, initial values of the control signal generated by the sensor when the pedal lever is at the idle position and the wide-open throttle position are measured. The initial values are then compared to the corresponding target values. Upon finding that the corresponding values are not substantially equal, the first and second trim resistors are then trimmed until the values of the control signal at the idle position and the wide-open throttle position are substantially equal to the corresponding target values.

The method is characterized by determining an intermediate target value for the control signal based on both the target values and the initial values prior to trimming the first and second trim resistors and trimming one of the trim resistors until the value of the control signal generated by the sensor when the pedal lever is at the idle position is substantially equal to the intermediate target value.

The intermediate target value allows a manufacturer to adjust the control signal generated by the sensor between the idle position and the wide-opert throttle position without any need for the back-and-forth trimming of the trim resistors of the prior art. With the method of the present invention, after one of the trim resistors is trimmed based on the intermediate target value, trimming the other trim resistor automatically shifts the value of the control signal at both the idle position and the wide-open throttle position until the values are substantially equal to the corresponding target values. In other words, the values at the idle position and the wide-open throttle position automatically drift to the corresponding target values thereby eliminating the back-and-forth laser trimming of the trim resistors.

## BRIEF DESCRIPTION OF THE SEVERAL VIEWS OF THE DRAWINGS

Advantages of the present invention will be readily appreciated as the same becomes better understood by reference to the following detailed description when considered in connection with the accompanying drawings wherein:

Figure 1 is a perspective view of a pedal assembly with an electronic sensor integrated therein;

Figure 2 is a graph of sensor output versus pedal lever travel; and

Figure 3 is a top view of a printed circuit board integrating the electronic sensor therein.

## DETAILED DESCRIPTION OF THE INVENTION

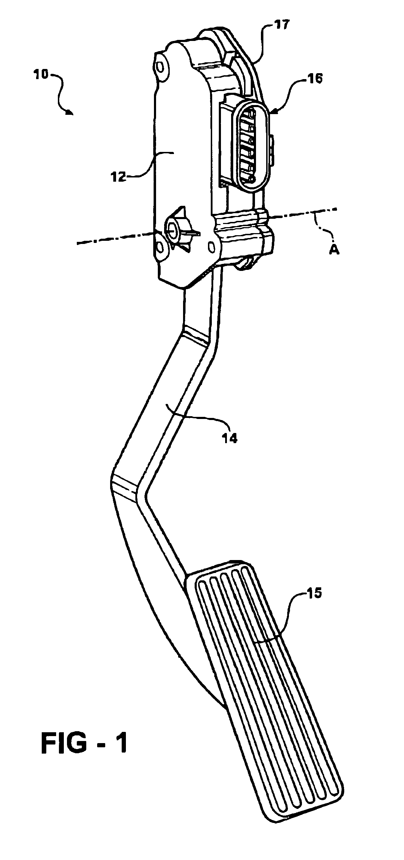

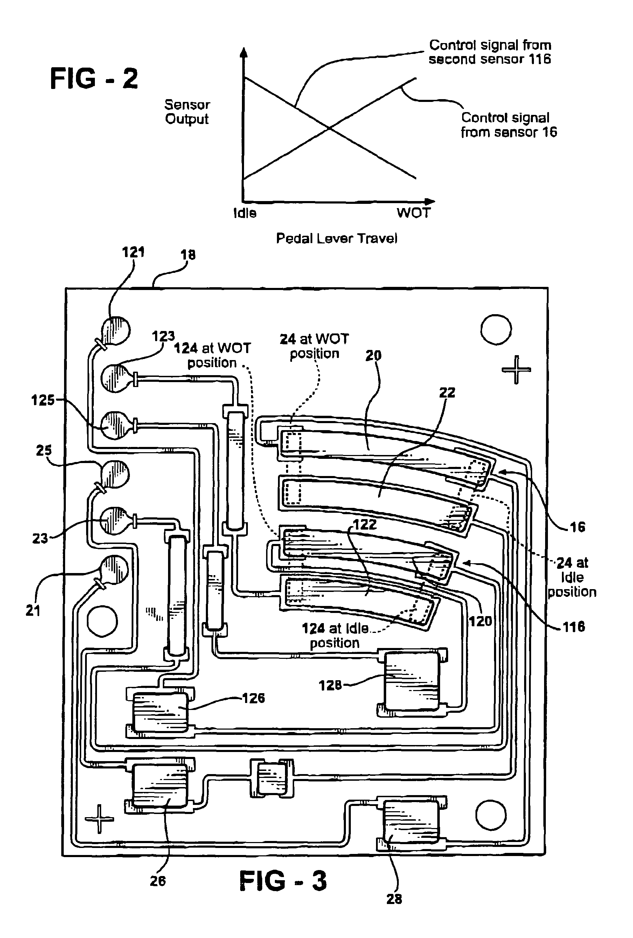

Referring to the Figures, wherein like numerals indicate like or corresponding parts throughout the several views, a pedal assembly of the present invention is generally shown at **10**. With reference to F1G. 1, the pedal assembly **10** comprises a housing **12** and a pedal lever **14** pivotally supported by the housing **12**. The pedal lever **14** is pivotally supported for rotation about a pivot axis **A** between an idle position and a wide-open throttle (WOT) position upon depression of a pedal pad **15**. An electronic sensor **16** is integrated into the housing **12** of the pedal assembly **10** to generate a control signal that varies linearly in value as the pedal lever **14** rotates between the idle position and the WOT position. In FIG. 2, the control signal generated by the sensor **16** is represented as a positive slope of sensor output vs. pedal lever travel (pedal lever rotation).

Referring to FIG. 3, a cover **17** of the housing **12** has been removed to expose the sensor **16.** The sensor **16** is printed on a circuit board **18** that is positioned securely within the housing **12.** The sensor **16** comprises a main resistive track **20** and a conductive track **22** in spaced relation to the main resistive track **20.** A sliding contact **24** (shown by dashed lines) is fixed to a first end (not shown) of the pedal lever **14.** The sliding contact **24** slides along the tracks **20, 22** as the pedal lever **14** rotates between the idle position and the WOT position. The sliding contact **24** provides electrical communication between the main track **20** and the conductive track **22** to generate the control signal in accordance with well-known principles of potentiometers. In patticular, a reference voltage $V_{ref}$ is supplied to the sensor **16** at a first terminal **21** and an output voltage $V_{out}$ that is measured at a second terminal **23** varies as the sliding contact **24** slides along the tracks **20. 22.** The sensor **16** is grounded at a third terminal **25.**

First **26** and second **28** trim resistors are electrically connected to the sensor **16.** The trim resistors **26, 28** are printed on the circuit board **18** in series with the main resistive track **20.** The trim resistors **26, 28** are laser trimmed in accordance with the method set forth below to adjust the control signal generated by the sensor **16.** The control signal may need to be adjusted for synchronizing the sensor **16** with an electronic control module (ECM) of a vehicle. Adjusting the control signal establishes a range of values for the control signal to be generated by the sensor **16** between the idle position, i.e., when the pedal lever **14** is at the idle position, and the WOT position, i.e., when the pedal lever **14** is at the WOT position.

The method for adjusting the control signal generated by the sensor **16** first comprises selecting a target range of values for the control signal to be generated by the sensor **16.** The target range of values spans from one target value $P_{IdleT}$ for the control signal to be generated by the sensor **16** at the idle position and another target value $P_{WorT}$ for the control signal to be generated by the sensor **16** at the WOT position. These target values $P_{IdleT}$. $P_{WotT}$ are equivalent to ratios of the output voltage $V_{out}$ relative to the reference voltage $V_{ref}$ to be generated at the idle and WOT positions, respectively. Thus, the target values $P_{IdleT}$, $P_{WotT}$ are expressed as:

$$P_{IdleT} = \frac{V_{out}}{V_{ref}}, \text{ target ratio for the control signal at the idle position}$$

$$P_{WotT} = \frac{V_{out}}{V_{ref}}, \text{ target ratio for the control signal at the WOT position}$$

Once the target values $P_{IdleT}$, $P_{WotT}$ are selected, initial values $P_{IdleNT}$, $P_{WotNT}$ of the control signal generated by the sensor **16** when the pedal lever **14** is at the idle position and the WOT position are measured. The initial values $P_{IdleNT}$, $P_{WotNT}$ are equivalent to initial ratios of the output voltage $V_{out}$ relative to the reference voltage $V_{ref}$ at the idle position and the WOT position, respectively, prior to any laser trimming. Thus, the initial values $P_{IdleNT}$, $P_{WolNT}$ are expressed as:

$$P_{IdleNT} = \frac{V_{out}}{V_{ref}}, \text{ initial ratio of the control signal at the idle position}$$

$$P_{WotNT} = \frac{V_{out}}{V_{ref}}, \text{ initial ratio of the control signal at the WOT position}$$

The steps of measuring the initial values $P_{IdleNT}$, $P_{WotNT}$ of the control signal when the pedal lever **14** is at the idle position and the WOT position are further defined as measuring the reference voltage $V_{ref}$ and the output voltage $V_{out}$ when the pedal lever **14** is at the idle position, cycling the pedal lever **14** from the idle position to the WOT position, and measuring the reference voltage $V_{ref}$ and the output voltage $V_{out}$ when the pedal lever **14** is at the WOT position.

After the initial values $P_{IdleNT}$, $F_{WotNT}$ are measured, the initial values $P_{IdleNT}$, $P_{WotNT}$ are compared to the target values $P_{IdleT}$, $P_{WotT}$ to determine whether the corresponding values $P_{IdleNT}$, $P_{IdleT}$ and $P_{WotNT}$, $P_{WotT}$ are substantially equal. In the event that the corresponding values $P_{IdleNT}$, $P_{IdleT}$ and $P_{WotNT}$, $P_{WotT}$ are not substantially equal, the trim resistors **26, 28** are laser trimmed until values of the control signal at the idle position and the wide-open throttle position are substantially equal to the corresponding target values $P_{IdleT}$, $P_{WotT}$.

As a first step in the laser trimming process, an intermediate target value $P_{IdleInt}$ is determined based on the target values $P_{IdleT}$, $P_{WotT}$ and the initial values $P_{IdleNT}$, $P_{WotNT}$. The intermediate target value $P_{IdleInt}$ is expressed as:

$$P_{IdleInt} = \frac{K * P_{IdleT}}{1 + K * P_{IdleT} - P_{IdleNt}}$$

where,

$$K = \frac{P_{WotNT} - P_{IdleNT}}{P_{WotT} - P_{IdleT}}$$

Once the intermediate target value $P_{IdleInt}$ has been calculated, the first trim resistor **26** is trimmed until the value of the control signal generated by the sensor **16** when the pedal lever **14** is at the idle position is substantially equal to the intermediate target value $P_{IdleInt}$.

After trimming the first trim resistor **26**, the pedal lever **14** is cycled to the WOT position and the second trim resistor **28** is trimmed until the value of the control signal generated by the sensor **16** is substantially equal to the corresponding target value $P_{WotT}$. Trimming the second trim resistor **28** automatically shifts the value of the control signal generated by the sensor **16** when the pedal lever **14** is at the idle position to the corresponding target value $P_{IdleT}$. This eliminates the need for re-trimming the first trim resistor **26**.

The calculation of the intermediate target value $F_{IdleInt}$ is derived from the following relationships based on well-known principles of electrical circuits:

$$P_{IdleNT} = \frac{R_I}{R_T}, \ P_{WinNT} = \frac{R'_I}{R'_T}, \ P_{IdleT} = \frac{R'_I}{R'_T}, \ P_{WotT} = \frac{R'_W}{R'_T},$$

and.

$$R_T = R_o + R_{IT} + R_{WT}, \ R'_T = R_T + \Delta R_{IT} + \Delta R_{WT}, \ R'_I = R_I + \Delta R_{IT}, \ R'_W = R_W + \Delta R_{IT},$$

where,

$R_I$ is the resistance at the idle position before laser trimming,

$R_W$ is the resistance at the WOT position before laser trimming.

$R_T$ is the total resistance of the trim resistors **26**, **28** and the main resistive track 20 before laser trimming,

$R_0$ is the resistance of the main resistive track **20**,

$R'_I$ is the resistance at the idle position after laser trimming,

$R'_W$ is the resistance at the WOT position after laser trimming,

$R'_T$ is to total resistance of the trim resistors **26**, **28** and the main resistive track **20** after laser trimming,

$\Delta R_{IT}$ is the change in resistance of the first trim resistor **26** after laser trimming, and

$\Delta R_{WT}$ is the change in resistance of the second trim resistor **28** after laser trimming.

because,

$$P_{IdleT} = \frac{R'_I}{R'_T} = \frac{R_I + \Delta R_{IT}}{K * R_T} = \frac{1}{K}\left(P_{IdleNT} + \frac{\Delta R_{IT}}{R_T}\right).$$

then,

$$\Delta R_{IT} + (K * R_{IdleT} - P_{IdleNT}) * R_T,$$

and,

$$K = \frac{R'_T}{R_T} = \frac{P_{WotNT} - P_{IdleNT}}{P_{WotT} - P_{IdleNT}},$$

therefore,

$$P_{IdleInt} = \frac{R'_I}{R_T + \Delta R_{IT}} = \frac{R_I + \Delta R_{IT}}{R_T + \Delta R_{IT}} = \frac{K * P_{IdleT}}{1 + K * P_{IdleT} - P_{IdleINT}}$$

A second sensor **116** is also printed on the circuit board **18**. The components of the second sensor **116** are illustrated in FIG. 3 with numerals adjusted by **100** relative to the corresponding components of the first sensor **16**. The second sensor **116** is trimmed in accordance with the method set **forth** above, except that the second sensor **116** generates a negative slope of sensor output vs, pedal lever travel, See FIG. 2. As a result, the first trim resistor **126** is trimmed first until the value of the control signal at the idle position is substantially equal to the intermediate target value $P_{IdleInt}$, then the second trim resistor **128** is trimmed. The following equation is used to calculate the intermediate target value $P_{IdleInt}$ used to adjust the control signal of the second sensor **116:**

$$P_{IdleInt} = \frac{P_{IdleNT}}{P_{IdleInt} + K * (1 - P_{IdleT})}$$

where,

$$K = \frac{P_{IdleNT} - P_{WotNT}}{P_{IdleT} - P_{WotT}}$$

The relationships used to derive the intermediate target value $P_{IdleInt}$ ulilizzd in adjusting the control signal of the second sensor **116** are the same as presented above with reference to adjusting the control signal of the first sensor **16,** with the following exceptions:

$$R'_I = R_I + \Delta R_{WT},$$

and

$$R'_W = R_W + \Delta R_{WT}$$

The method of the present invention is best illustrated by way of the following example. First, the target values **P**$_{IdleT}$. **P**$_{WotT}$ are selected to establish the desired range to be generated by the control signal between the idle position and the WOT position. The target value **P**$_{IdleT}$ at the idle position is an output voltage **V**$_{out}$ of **1** volt relative to a reference voltage **V**$_{ref}$ of 5 volts, e.g., a target ratio of 1/5, and the target value **P**$_{wotT}$ at the WOT position is an output voltage **V**$_{out}$ of 4 volts relative to a reference voltage **V**$_{ref}$ of 5 volts, e.g., a target ratio of 4/5:

$$P_{IdleT} = \frac{V_{out}}{V_{ref}} = \frac{1}{5} \qquad P_{WotT} = \frac{V_{out}}{V_{ref}} = \frac{4}{5}$$

With the target values **P**$_{IdleT}$, **P**$_{WotT}$ selected, the initial values **P**$_{IdleNT}$, P$_{WotNT}$ are measured. First, the pedal lever **14** is placed at the idle position to measure the initial value **P**$_{IdkNT}$ of the control signal at the idle position, An output voltage **V**$_{out}$ of 0.8 volts relative to a reference voltage **V**$_{ref}$ of 5 volts is measured at the idle position, e.g., an initial ratio of 0.8/5. The pedal lever **14** is then cycled to the WOT position to measure the initial value **P**$_{WotNT}$ of the control signal at the WOT position. An output voltage **V**$_{out}$ of 4.1 volts relative to a reference voltage **V**$_{ref}$ of 5 volts is measured at the WOT position, e.g., an initial ratio of 4.1/5:

$$P_{IdleNT} = \frac{V_{out}}{V_{ref}} = \frac{0.8}{5} \qquad P_{WotNT} = \frac{V_{out}}{V_{ref}} = \frac{4.1}{5}$$

The corresponding values **P**$_{IdleNT}$, **P**$_{IdleT}$ and **P**$_{WotNT}$, **P**$_{WotT}$ are not substantially equal, thus the trim resistors **26, 28** must be laser trimmed until the values of the control signal at the idle position and the WOT position are substantially equal to the corresponding target values **P**$_{IdleT}$, **P**$_{WotT}$. First, however, the intermediate target value **P**$_{IdleInt}$ is calculated:

$$P_{IdleInt} = \frac{K * P_{IdleT}}{1 + K * P_{IdleT} - P_{IdleNT}} = \frac{3.3}{15.9}$$

where,

$$K = \frac{P_{WotNT} - P_{IdleNt}}{P_{WotT} - P_{IdleNT}} = \frac{3.3}{3}$$

Once the intermediate target value **P**$_{IdleInt}$ has been calculated, the pedal lever **14** is cycled back to the idle position and the first trim resistor **26** is trimmed until the value of the control signal at the idle position is substantially equal to the intermediate target value **F**$_{IdleInt}$. In this example, the first trim resistor **26** is trimmed until the output voltage **V**$_{out}$ measured relative to the reference voltage **V**$_{ref}$ is 3.3/15.9. Assuming a constant reference voltage **V**$_{ref}$ of 5 volts, this equates to an output voltage **V**$_{out}$ of approximately 1.04 volts to be set at the idle position.

After trimming the first trim resistor **26,** the pedal lever **14** is cycled to the WOT position and the second trim resistor **28** is trimmed until the output voltage **V**$_{out}$ measured relative to the reference voltage **V**$_{ref}$ results in the target ratio of 4/5. This automatically shifts the value of the control signal at the idle position to the corresponding target ratio of 1/5. It should be appreciated that in practice the range between the target values **P**$_{Idlet}$, **P**$_{WotT}$ will generally be less than or equal to the range between the initial values **P**$_{IdleNT}$, **P**$_{WotNT}$, as illustrated in the example. In other words, the variable **K** will generally be greater than or equal to 1. It should also be appreciated that the method of the present invention is applied to each individual pedal assembly **10** in an assembly line to adjust the control signals generated by the sensors **16, 116** of each pedal assembly **10**. Thus, the method of the present invention accounts for any mechanical variations between pedal assemblies **10** in the line that result in variations in the initial values **P**$_{IdleNT}$, **P**$_{WotNT}$ of the control signals, which, for practical purposes, is often the case.

Obviously, many variations and modifications of the present invention are possible in light of the above teachings, The invention may be practiced otherwise than as specifically described within the scope of the appended claims, wherein that which is prior an is antecedent to the novelty set forth in the "characterized by" clause. The novelty is meant to be particularly and distinctly recited in the "characterized by" clause whereas the antecedent recitations merely set forth the old and well-known combination in which the invention resides. These antecedent recitations should be interpreted to cover any combination in which the incentive novelty exercises its utility.

**Claims**

1. A method for adjusting a control signal generated by an electronic sensor **(16)** using first **(26)** and second **(28)** trim resistors electrically connected to the sensor **(16)** wherein the sensor **(16)** is fitted to a pedal assembly **(10)** having a pedal lever **(14)** and the control signal generated by the sensor **(16)** varies in value as the pedal lever **(14)** rotates between an idle position and a wide-open throttle position, said method comprising the steps of:

   selecting a target value ($P_{IdleT}$) for the control signal to be generated by the sensor **(16)** when the pedal lever **(14)** is at the idle position.
   selecting a target value ($P_{WotT}$) for the control signal to be generated by the sensor **(16)** when the pedal lever **(14)** is at the wide-open throttle position,
   measuring an initial value ($P_{IdleNT}$) of the control signal generated by the sensor **(16)** when the pedal lever **(14)** is at the idle position,
   measuring an initial value ($P_{WotNT}$) of the control signal generated by the sensor **(16)** when the pedal lever **(14)** is at the wide-open throttle position,
   comparing the initial values ($P_{IdleNT}$, $P_{WotNT}$) of the control signal and the corresponding target values ($P_{IdleT}$, $P_{WotT}$), and
   trimming both the first **(26)** and second **(28)** trim resistors until values of the control signal at the idle position and the wide-open throttle position are substantially equal to the corresponding target values ($P_{IdleT}$, $P_{WotT}$).
   said method **characterized by** determining an intermediate target value ($P_{IdleInt}$) for the control signal based on the initial ($P_{IdleNT}$, $P_{WotNT}$) and target ($P_{IdleT}$, $P_{WotT}$) values prior to trimming the first **(26)** and second **(28)** trim resistors and trimming one of the trim resistors **(26, 28)** until the value of the control signal generated by the sensor **(16)** when the pedal lever **(14)** is at the idle position is substantially equal to the intermediate target value ($P_{IdleInt}$).

2. The method as set forth in claim 1 wherein trimming one of the trim resistors **(26, 28)** is further defined as trimming the first trim resistor **(26)** until the value of the control signal generated by the sensor **(16)** when the pedal lever **(14)** is at the idle position is substantially equal to the intermediate target value ($P_{IdleInt}$).

3. The method as set forth in claim 2 wherein trimming both the first **(26)** and second **(28)** trim resistors further includes trimming the second trim resistor **(28)** after trimming the first trim resistor **(26)** and until the value of the control signal generated by the sensor **(16)** when the pedal lever **(14)** is at the wide-open throttle position is substantially equal to the corresponding target value ($P_{WotT}$) whereby trimming the second trim resistor **(28)** automatically shifts the value of the control signal generated by the sensor **(16)** when the pedal lever **(14)** is at the idle position to the corresponding target value thereby eliminating any need to re-trim the first trim resistor **(26).**

4. The method as set forth in claim 2 wherein determining the intermediate target value ($P_{IdleInt}$) for the control signal is further defined as determining the intermediate target value ($P_{IdleInt}$) for the control signal based on the equation:

$$P_{IdleInt} = \frac{K * P_{IdleT}}{1 + K * P_{IdleT} - P_{IdleNT}}$$

where,

$$K = \frac{P_{WotNT} - P_{IdleNT}}{P_{WotT} - P_{IdleT}}$$

and

$P_{IdleInt}$ is the intermediate target value,
$P_{IdleT}$ is the target value for the control signal at the idle position,
$P_{WotT}$ is the target value for the control signal at the wide-open throttle position,

7

$P_{IdleNT}$ is the initial value of the control signal at the idle position, and
$P_{WotNT}$ is the initial value of the control signal at the wide-open throttle position.

**5.** The method as set forth in claim 2 wherein determining the intermediate target value ($P_{IdleInt}$) for the control signal is further defined as determining the intermediate target value ($P_{IdleInt}$) for the control signal based on the equation:

$$P_{IdleNT} = \frac{P_{IdleNT}}{P_{IdleNT} + K * (1 - P_{IdleT})}$$

where,

$$K = \frac{P_{IdleNT} - P_{WotNT}}{P_{IdleT} - P_{WotNT}}$$

and

$P_{IdleInt}$ is the intermediate target value,
$P_{IdleT}$ is the target value for the control signal at the idle position,
$P_{WotT}$ is the target value for the control signal at the wide-open throttle position,
$P_{IdleNT}$ is the initial value of the control signal at the idle position, and
$P_{WotNT}$ is the initial value of the control signal at the wide-open throttle position.

**6.** The method as set forth in claim 1 wherein the steps of selecting the target values ($P_{IdleT}$, $P_{WotT}$) for the control signal at the idle position and the wide-open throttle position are further defined as selecting target ratios based on a reference voltage ($V_{ref}$) and an output voltage ($V_{out}$) when the pedal lever **(14)** is at the idle position and the wide-open throttle position.

**7.** The method as set forth in claim 6 wherein the steps of measuring the initial values ($P_{IdleNT}$, $P_{WotNT}$) of the control signal when the pedal lever **(14)** is at the idle position and the wide-open throttle position are further defined as measuring the reference voltage ($V_{ref}$) and the output voltage ($V_{out}$) when the pedal lever **(14)** is at the idle position, cycling the pedal lever **(14)** from the idle position to the wide-open throttle position, and measuring the reference voltage ($V_{ref}$) and the output voltage ($V_{out}$) when the pedal lever **(14)** is at the wide-open throttle position.

**8.** The method as set forth in claim 2 including cycling the pedal lever **(14)** to the wide-open throttle position after trimming the first trim resistor **(26)**.

**FIG - 1**

**FIG - 2**

Sensor Output

Control signal from second sensor 116

Control signal from sensor 16

Idle

WOT

Pedal Lever Travel

121 18

123 124 at WOT position

24 at WOT position 20 22

125

25

23

21

122

24 at Idle position

124 at Idle position 120 116

128

126

26 **FIG - 3** 28

**European Patent Office**

## EUROPEAN SEARCH REPORT

Application Number

EP 05 01 0578

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | EP 1 211 586 A (TELEFLEX INCORPORATED) 5 June 2002 (2002-06-05) * the whole document * ----- | 1-8 | G01D18/00 G01D3/02 G05G1/14 |
| Y | EP 0 441 549 A (MOTOROLA, INC) 14 August 1991 (1991-08-14) * column 5, line 38 - column 7, line 10 * ----- | 1-8 | |
| A | EP 0 677 725 A (SSI TECHNOLOGIES, INC) 18 October 1995 (1995-10-18) * page 6, line 41 - page 7, line 18 * ----- | 1 | |

| TECHNICAL FIELDS SEARCHED (Int.Cl.7) |
|---|
| G01D G05G |

The present search report has been drawn up for all claims

| Place of search | Date of completion of the search | Examiner |
|---|---|---|
| The Hague | 24 August 2005 | Lloyd, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 596 167 A1**

## ANNEX TO THE EUROPEAN SEARCH REPORT
## ON EUROPEAN PATENT APPLICATION NO.

EP 05 01 0578

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2005

| Patent document cited in search report | | | Publication date | Patent family member(s) | | | Publication date |
|---|---|---|---|---|---|---|---|
| EP 1211586 | A | | 05-06-2002 | US | 2002062708 | A1 | 30-05-2002 |
| | | | | EP | 1211586 | A1 | 05-06-2002 |
| | | | | JP | 2002161762 | A | 07-06-2002 |
| EP 0441549 | A | | 14-08-1991 | US | 5031461 | A | 16-07-1991 |
| | | | | DE | 69109320 | D1 | 08-06-1995 |
| | | | | DE | 69109320 | T2 | 07-12-1995 |
| | | | | EP | 0441549 | A1 | 14-08-1991 |
| | | | | JP | 4213020 | A | 04-08-1992 |
| EP 0677725 | A | | 18-10-1995 | US | 5507171 | A | 16-04-1996 |
| | | | | CA | 2145698 | A1 | 16-10-1995 |
| | | | | EP | 0677725 | A1 | 18-10-1995 |
| | | | | JP | 7311100 | A | 28-11-1995 |

EPO FORM P0459

For more details about this annex : see Official Journal of the European Patent Office, No. 12/82